# EUROPEAN PATENT APPLICATION

(11) **EP 3 866 353 A1**
(43) Date of publication of application: **18.08.2021**
(21) Application number: 20205969.7
(22) Date of filing: 05.11.2020
(51) Int. Cl.: H04B 7/185, H04L 29/06

(54) **SYSTEM AND METHOD FOR IDENTIFYING THE COMMUNICATION OF AT LEAST ONE COMMUNICATION DEVICE AS WELL AS TEST AND MEASUREMENT SYSTEM**

(30) Priority: 13.02.2020 DE 102020000930
(71) Applicant: Rohde & Schwarz GmbH & Co. KG, 81671 München (DE)
(72) Inventor: Megow, Holger, 81671 München (DE); Lehmann, Thomas, 81671 München (DE)
(74) Representative: Prinz & Partner mbB

(57) **Abstract**

A system (12) for identifying the communication (T) of at least one communication device (18) has a stationary monitoring unit (22) configured to receive a plurality of communications (C) and at least one separate, mobile reception unit (24) configured to capture the emitted communication signals (S) of the at least one communication device (18).

Further, a method for identifying the communication (T) of at least one communication device (18) is shown.

In addition, a test and measurement system (28) is described for testing a communication device (18).

## Description

The invention concerns a system and a method for identifying the communication of at least one communication device. Further, the invention concerns a test and measurement system.

For effectively monitoring a communication originating from a communication device, for instance a satellite communication device, it is necessary to know the communication, i.e. the communication channel, stream and/or signal, to identify the target communication in the plurality of communications relayed by a communication transmitter, for instance a communication satellite.

Identifying the correct communication, particularly satellite communication, is typically performed content based, which is tedious and time consuming.

Thus, it is an object of the invention to provide a resource efficient and a quick way to identify the communication, for instance satellite communication, of a communication device such as a target satellite communication device.

For this purpose, a system for identifying the communication of at least one communication device is provided, comprising a stationary monitoring unit configured to receive a plurality of communications and at least one separate, mobile reception unit configured to capture the emitted communication signals of the at least one communication device.

The communication may relate to a satellite communication.

Hence, the at least one communication device may be at least one target satellite communication device.

By capturing the emitted communication signals of the target satellite communication device it is possible to gain information about the characteristics of the satellite communication of the target satellite communication device. This information may then be used to identify this satellite communication within the plurality of satellite communication relayed by the communication satellite. Thus, the identification of the target satellite communication can be performed quickly and automatically with low resources.

The emitted communication signals are in particular captured directly by the mobile reception unit, i.e. before they are relayed by the communication satellite.

A satellite communication comprises, for example, communication signals exchanged between two satellite communication devices relayed by a communication satellite. The communication signals have specific characteristic features. Thus, different satellite communications may differ in these characteristic features.

The downlink streams from a plurality of communication satellite are received by the stationary monitoring unit including the relayed uplink stream of the target satellite communication device. Thus, the plurality of received satellite communications includes the satellite communication of the target satellite communication device.

The mobile reception unit may be located closer to target satellite communication device than stationary monitoring unit. For example the mobile reception unit is located so close to, e.g. within the transmission range of, the target satellite communication device so that is able to capture the communication signals emitted by the target satellite communication device.

In an aspect, the mobile reception unit and/or the stationary monitoring unit is configured to determine at least one characteristic feature of the captured communication signals so that very specific information about the satellite communication is gathered.

In particular, the characteristic features of the communication signals are the same as the characteristic features of the satellite communication of the satellite communication device. The characteristic features or the set of characteristic features may be unique.

For example, the characteristic feature is the at least one frequency used, the symbol rate, the burst length, the modulation, a terminal identifier, the terminal vendor, the MAC-address (media access control address), the IP-address (internet protocol address) and/or a voice-ID. This way, the characteristic features are sufficiently specific.

For a direct sample of the satellite communication of the target satellite communication device, the mobile reception unit may be configured to capture the uplink stream of the communication, particularly the satellite communication, emitted by the at least one communication device, for instance the target satellite communication device, in particular to determine the at least one characteristic feature based on the uplink stream.

In particular, the uplink stream consist of the emitted communication signals.

In another aspect, the mobile reception unit is configured to transmit the captured communication signals and/or the at least one characteristic feature to the stationary monitoring unit so that the information gained about the satellite communication is passed to the stationary monitoring unit.

The transmission may be via a communication channel between the mobile reception unit and the stationary monitoring unit. For example, the communication channel is not a satellite communication.

For effectively limiting the possible candidates of the plurality of received satellite communications, the stationary monitoring unit may be configured to identify at least one satellite communication of the plurality of received satellite communications as several possible or the exact satellite communication of the target satellite communication device based on the captured communication signals transmitted from the mobile reception unit and/or the at least one characteristic feature.

In an embodiment, the stationary monitoring unit is configured to identify the several possible communications, for instance satellite communications, and/or the exact communication, for instance satellite communication, as the at least one of the received plurality of communications, for instance satellite communications, having the same at least one characteristic feature as the captured communication signals. This way, high accuracy is ensured.

Further analysis of the several possible communications, for instance satellite communications, may be performed to yield the identification of the exact communication, for instance satellite communication, of the at least one communication device, for instance the at least one target satellite communication device.

In an embodiment, the stationary monitoring unit is configured to monitor the at least one communication, for instance the at least one satellite communication, identified as one of the possible or the exact communication, particularly satellite communication, of the at least one communication device, particularly the at least one target satellite communication device, for systematic and/or continuous monitoring.

Further, for above mentioned purpose, a method is provided for identifying the communication, for instance satellite communication, of at least one communication device, particularly at least one target satellite communication device, using a system with a stationary monitoring unit and a separate mobile reception unit, in particular a system as described above. The method comprises the following steps:
a) receiving a plurality of communications, for instance satellite communications, by the stationary monitoring unit of the system,
b) capturing emitted communication signals of the at least one communication device, particularly at least one target satellite communication device, by the mobile reception unit,
c) determining, by the mobile reception unit and/or the stationary monitoring unit, at least one characteristic feature of the captured communication signals,
d) transmitting the captured communication signals and/or the at least one characteristic feature of the communication signals to the stationary monitoring unit, and
e) identifying, by the stationary monitoring unit, at least one communication , for instance satellite communication, of the received plurality of communications, particularly satellite communications, as a possible or the exact communication, for instance satellite communication, of the at least one communication device, for instance the at least one target satellite communication device, based on the captured communication signals transmitted from the mobile reception unit and/or based on the at least one characteristic feature.

The features and advantages discussed with respect to the system also apply to the method and vice versa. In particular, the method may comprise steps corresponding to the tasks that the components of the system are configured to perform.

Further analysis of the several possible satellite communications may be performed to identify the exact satellite communication of the at least one target satellite communication device.

For example, the stationary monitoring unit identifies the several possible communications, for instance satellite communications, and/or the exact communication, particularly the exact satellite communication, as the at least one of the received plurality of communications, for instance satellite communications, having the same at least one characteristic feature as the captured communication signals.

The stationary monitoring unit may receive the downlink streams from at least one communication transmitter, particularly communication satellite, including the relayed uplink stream of the communication device, for instance target satellite communication device.

In an aspect, the mobile reception unit captures the uplink stream of the communication, for instance satellite communication, emitted by the at least one communication device, for instance target satellite communication device, in particular to determine the characteristic feature based on the uplink stream.

In an embodiment, the mobile reception unit is moved close to the communication device, for instance target satellite communication device, in particular within the transmission range of the communication device, for instance target satellite communication device, to capture the communication signals emitted by the communication device, for instance target satellite communication device. This way, proper capture of the emitted communication signals is ensured.

For systematic and/or continuous monitoring, the stationary monitoring unit may monitor the at least one communication, particularly satellite communication, identified as a possible or the exact communication, particularly satellite communication, of the at least one communication device, for instance target satellite communication device.

Moreover, a test and measurement system is provided for testing a communication device, wherein the test and measurement system comprises the system described above. Particularly, the test and measurement system comprises a device under test that is established by the communication device.

The test and measurement system may comprise a testing chamber, for instance an anechoic chamber in which the device under test is placed for testing purposes. The system may further comprise a communication transmitter that communicates with the device under test, namely the communication device.

Further features and advantages will be apparent from the following description as well the accompanying drawings, to which reference is made. In the drawings:
- Figure1 shows schematically a system according to the invention in use,
- Figure 2 shows a flow chart of a method according to the invention, and
- Figure 3 shows schematically a test and measurement system according to the invention.

Lists having a plurality of alternatives connected by "and/or", for example "A, B and/or C" are to be understood to disclose in arbitrary combination of the alternatives, e.g. the lists are to be read as "A and/or B and/or C".

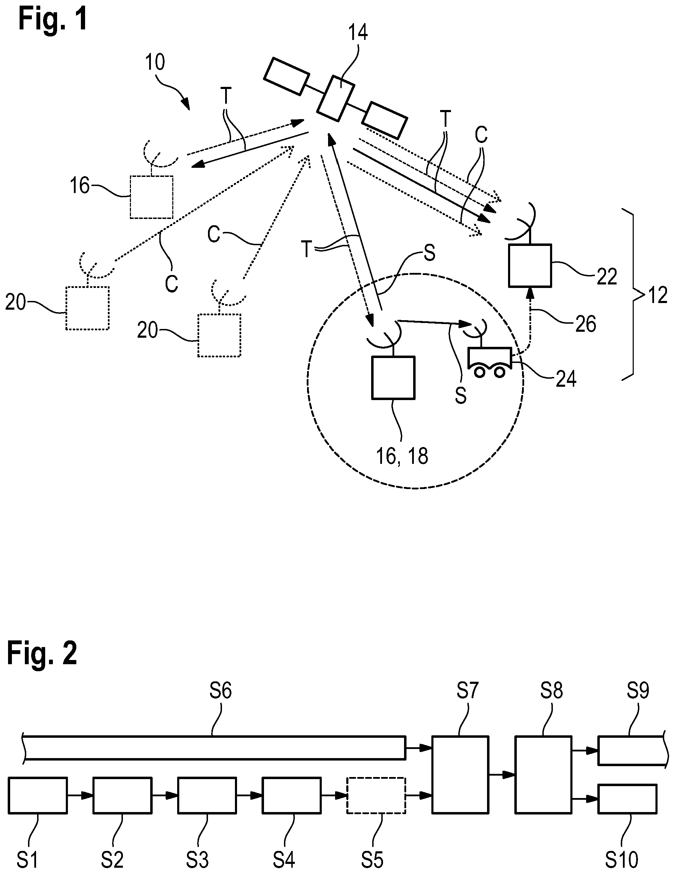

Figure 1 shows a satellite communication system 10 and a system 12 according to the invention for identifying the satellite communication of at least one target satellite communication device. Satellite communication using such a satellite communication system 10 is well known.

The satellite communication system 10 comprises a communication satellite 14 and two satellite communication devices 16.

The satellite communication devices 16 may be stationary communication facilities and/or mobile devices.

The satellite communication devices 16 establish satellite communication via the communication satellite 14, meaning that each of the satellite communication devices 16 emits communications signals as an uplink stream to the communication satellite 14. The communication satellite 14 relays the communication signals as a downstream to the other one of the satellite communication devices 16 and vice versa.

Of course, a point-to-multipoint connection (e.g. a star network) is also possible. The communication signal is then relayed to multiple other communication devices 16.

The satellite communication may be performed using radiofrequency or optical frequency electromagnetic waves.

For the purpose of the description, one of the satellite communication devices 16 is called the target satellite communication device 18 (shown in solid lines). The other one of the satellite communication devices 16 is of minor importance and shown with dashed lines in Figure 1.

Further, the satellite communication between the satellite communication devices 16, i.e. the satellite communication of the target satellite communication device 18, may be referred to as the target satellite communication T in the following for ease of understanding.

This target satellite communication T between the target satellite communication device 18 and the other satellite communication device 16 is of interest and shall be monitored using the system 12.

Further, a plurality of other satellite communication devices 20 (shown in dotted lines) communicating via the communication satellite 14 are present. Thus, the communication satellite 14 relays the plurality of communication signals of all satellite communication devices 16, 18, 20 back to the earth as illustrated with various arrows in Figure 1. These other satellite communication C of the other satellite communication device 20 are also received by the system 12 alongside the target satellite communication T.

The system 12 for identifying the target satellite communication comprises a stationary monitoring unit 22 and a mobile reception unit 24.

The stationary monitoring unit 24 maybe similar to a satellite communication device 16. The stationary monitoring unit 22 is, for example, a stationary facility with at least one antenna for monitoring satellite communication.

The stationary monitoring unit 22 may be located remote from the target satellite communication device 18 and thus does not receive signals from the target satellite communication device 18 directly. The signals and thus satellite communications received at the location of the stationary monitoring unit 22 are all of the several satellite communications relayed by the communication satellite 14.

The target satellite communication device 18 and the stationary monitoring unit 22 may be located in different countries or even on different continents.

The mobile reception unit 24 comprises an antenna and a control unit for receiving communication signals S from the target satellite communication device 18. The mobile reception unit 24 may be part of or mounted to a vehicle, like a ship, or an aircraft, like a drone. Of course, the mobile reception unit 24 may also be configured to be carried by foot.

For example, the mobile reception unit 24 is not configured or capable of transmitting signals for satellite communication itself.

The mobile reception unit 24 is connected for data transfer with the stationary monitoring unit 22 via a communication channel 26. For example, the data transfer is performed using radio frequency wireless communication, in particular terrestrial wireless networks, or a wired connection to the stationary monitoring unit 22. In particular, the communication channel 26 itself may be a satellite communication or the communication channel 26 is not a satellite communication.

The mobile reception unit 24 is located closer to the target satellite communication device 18 than the stationary monitoring unit 22. More precisely, the mobile reception unit 24 is located within the transmission range (shown in dashed lines) of the target satellite communication device 18 meaning that it is able to pick up the communication signals S emitted from the target satellite communication device 18 directly.

Thus, the mobile reception unit 24 is located close to the target satellite communication device 18 to capture the communication signals S directly without the need of the communication satellite 14.

The mobile reception unit 24 may not stay close to the target satellite communication device 18 as long as desired to monitor the target satellite communication T so that the stationary monitoring unit 22 has to differentiate the target satellite communication T from the other satellite communications C relayed by the communication satellite 14. In order to do so, the method illustrated in Figure 2 is carried out.

It is obvious that all of the mentioned components performing a specific step are configured to perform said step. An explicit mention of the fact that the components are configured to do so has been omitted for simplicity but is nevertheless part of the disclosure.

A first step S1, the mobile reception unit 24 is moved within the transmission range of the target satellite communication device 18.

In the next step S2, the mobile reception unit 24 captures the communication signals S emitted by the target satellite communication device 18. The communication signals S emitted are part of the satellite communication of the target satellite communication device 18 and are thus part of the target satellite communication T.

The communication signals S emitted by the target satellite communication device 18 are the uplink stream of the target satellite communication device 18 to the communication satellite 14.

The uplink stream and the whole target satellite communication T has characteristic features, like the one or more frequencies used for the satellite communication, the symbol rate, the burst length and/or the modulation of the signals used for communication.

Further, the communication signals S emitted from the target satellite communication device 18 themselves may have a characteristic feature like a terminal identifier, the terminal vendor, the MAC address, the IP Address and/or a voice ID.

In step S3, the mobile reception unit 24 analyses the uplink stream of the target satellite communication T, i.e. the communication signals S emitted from the target satellite communication device 18. From the captured communication signals S, the mobile reception unit 24 determines one or more of the characteristic features of the communication signals S and thus of the target satellite communication T. This set of characteristic features is in the best case unique for the target satellite communication T or at least a small subset of all of the satellite communications C relayed by the communication satellite 14.

In the next step S4, the mobile reception unit 24 transmits the characteristic features or a set of the characteristic features to the stationary monitoring unit 22 using the communication channel 26.

In addition to the characteristic features or alternatively, the mobile reception unit 24 may also transmit the captured communication signals S to the stationary monitoring unit 22 via the communication channel 26.

It is also conceivable that the determination of the characteristic features of the communication signals S is performed by the stationary monitoring unit 22 based on the captured communication signal S transmitted via the communication channel 26 (indicated as step S5 in dashed lines).

In step S6, the stationary monitoring unit 22 receives all of the satellite communications T, C from the communication satellite 14. In fact, the stationary monitoring unit 22 receives the downlink streams of these satellite communications T, C.

This may be done before, during or starting after steps S1 to S5.

The satellite communications C received from the communication satellite 14 comprise the target satellite communication T as well as other satellite communications C from the other satellite communication devices 20.

In step S7, the stationary monitoring unit 22 uses the characteristic features of the communication signals S captured by the mobile reception unit 24 and correlates them with the characteristic features of each of the satellite communications C, T received from the communication satellite 14.

The satellite communications having the same characteristic features as the communication signals S captured by the mobile reception unit 24 are regarded as possible target satellite communications T.

However, if the set of characteristic features is unique to the target satellite communication T, the comparison yields the target satellite communication T directly from the plurality of satellite communications C, T received by the stationary monitoring unit 22 from the communication satellite 14.

Thus, several possible targets satellite communications T or the target satellite communication T are identified from the several satellite communications C, T received by the stationary monitoring unit 22.

In case that several possible targets satellite communications T are identified, the stationary monitoring unit 22 may perform further analysis in step S8 of the possible target communications T to actually identify the correct target satellite communication T. This analysis may be content based and automatic or with assistance of an operator.

In step S9, the stationary monitoring unit 22 monitors the satellite communication C received from the communication satellite 14 identified as the target satellite communication T.

In case that there are more than one possible target satellite communications that have been identified as having the same characteristic features as the communication signals S, the stationary monitoring unit 22 may monitor all of them.

Nevertheless, this monitoring of several possible satellite communications uses less resources and is quicker than monitoring all of the satellite communications C received from the communication satellite 14.

In step S10, the mobile reception unit 24 may be moved away from the target satellite communication device 18.

As the target satellite communication T has already been identified, the services of the mobile reception unit 24 are no longer needed.

The monitoring of the target satellite communication T may continue even without the mobile reception unit 24 being within the transmission range of the target satellite communication device 18.

The mobile reception unit 24 may be removed as soon as the characteristic features of the captured communication signals S have been determined.

Thus, a quick and very resource efficient way for identifying and monitoring a satellite communication of a known target communication device 18 is achieved.

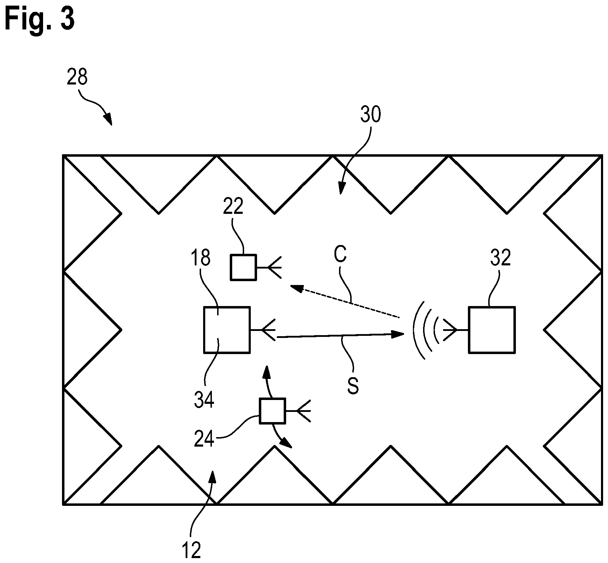

In Figure 3, a test and measurement system 28 is shown that comprises an anechoic chamber 30 and a transmitter 32 for establishing a communication with a device under test 34.

The device under test 34 corresponds to a communication device, namely the target satellite communication device 18.

As shown in Figure 3, the test and measurement system 28 generally comprises the system 12, namely the respective components.

Thus, the test and measurement system 28 comprises a stationary monitoring unit 22 configured to receive a plurality of communications C.

Further, the test and measurement system 28 comprises at least one separate, mobile reception unit 24 that is configured to capture the emitted communication signals S of the at least one communication device 18, namely the device under test 34.

## Claims

1. System for identifying the communication (T) of at least one communication device (18), comprising a stationary monitoring unit (22) configured to receive a plurality of communications (C) and at least one separate, mobile reception unit (24) configured to capture the emitted communication signals (S) of the at least one communication device (18).

2. System according to claim 1, **characterized in that** the mobile reception unit (24) and/or the stationary monitoring unit (22) is configured to determine at least one characteristic feature of the captured communication signals (S).

3. System according to claim 2, **characterized in that** the characteristic feature is the at least one frequency used, the symbol rate, the burst length, the modulation, a terminal identifier, the terminal vendor, the MAC-address, the IP-address and/or a voice-ID.

4. System according any one of the preceding claims, **characterized in that** the mobile reception unit (24) is configured to capture the uplink stream of the communication (T) emitted by the at least one communication device (18), in particular to determine the at least one characteristic feature based on the uplink stream.

5. System according any one of the preceding claims, **characterized in that** the mobile reception unit (24) is configured to transmit the captured communication signals (S) and/or the at least one characteristic feature to the stationary monitoring unit (22).

6. System according to claim 5, **characterized in that** the stationary monitoring unit (22) is configured to identify at least one communication (T) of the plurality of received communications (C) as several possible or the exact communication (T) of the communication device (18) based on the captured communication signals (S) transmitted from the mobile reception unit (24) and/or the at least one characteristic feature

7. System according to claim 6, **characterized in that** the stationary monitoring unit (22) is configured to identify the several possible communications and/or the exact communication (T) as the at least one of the received plurality of communications (C) having the same at least one characteristic feature as the captured communication signals (S).

8. System according to claim 6 or 7, **characterized in that** the stationary monitoring unit (22) is configured to monitor the at least one communication (T) identified as one of the possible or the exact communication (T) of the at least one communication device (18).

9. Method for identifying the communication of at least one communication device (18) using a system (12) with a stationary monitoring unit (22) and a separate mobile reception unit (24), in particular a system (12) according to any one of the preceding claims, the method comprising the following steps:
a) receiving a plurality of communications (C) by the stationary monitoring unit (22),
b) capturing emitted communication signals (S) of the at least one communication device (18) by the mobile reception unit (24),
c) determining, by the mobile reception unit (24) and/or the stationary monitoring unit (22), at least one characteristic feature of the captured communication signals (S),
d) transmitting the captured communication signals (S) and/or the at least one characteristic feature of the communication signals (S) to the stationary monitoring unit (22), and
e) identifying, by the stationary monitoring unit (22), at least one communication of the received plurality of communications (C) as a possible or the exact communication (T) of the at least one communication device (18) based on the captured communication signals (S) transmitted from the mobile reception unit (24) and/or based on the at least one characteristic feature.

10. Method according to claim 9, **characterized in that** the stationary monitoring unit (22) identifies the several possible communications and/or the exact communication (T) as the at least one of the received plurality of communications (C) having the same at least one characteristic feature as the captured communication signals (S).

11. Method according to claim 9 or 10, **characterized in that** the stationary monitoring unit (22) receives the downlink streams from at least one communication transmitter (14) including the relayed uplink stream of the target communication device (18).

12. Method according to any one of the claims 9 to 11, **characterized in that** the mobile reception unit (24) captures the uplink stream of the communication (T) emitted by the at least one communication device (18), in particular to determine the characteristic feature based on the uplink stream.

13. Method according to any one of the claims 9 to 12, **characterized in that** the mobile reception unit (24) is moved close to the communication device (18), in particular within the transmission range of the communication device (18), to capture the communication signals (S) emitted by the communication device (18).

14. Method according to any one of the claims 9 to 13, **characterized in that** the stationary monitoring unit (22) monitors the at least one communication identified as a possible or the exact communication (T) of the at least one communication device (18).

15. Test and measurement system for testing a communication device (18), wherein the test and measurement system (28) comprises the system (12) according to any of claims 1 to 8, in particular wherein the test and measurement system (28) comprises a device under test (34) that is established by the communication device (18).
